# EUROPEAN PATENT APPLICATION

(11) **EP 4 354 241 A1**
(43) Date of publication of application: **17.04.2024**
(21) Application number: 21945288.5
(22) Date of filing: 15.11.2021
(51) Int. Cl.: G05B 23/02, G06N 20/00, G01H 1/08, G06K 9/62

(54) **VIBRATION MEASUREMENT ERROR DETERMINATION METHOD AND VIBRATION ERROR DISCERNMENT SYSTEM USING SAME**

(30) Priority: 11.06.2021 KR 20210075933
(71) Applicant: Korea Hydro & Nuclear Power Co., Ltd, Gyeongju-si, Gyeongsangbuk-do 38120 (KR); ATG Co., Ltd., Seongnam-si, Gyeonggi-do 13562 (KR); Industry-Academic Cooperation Foundation Gyeongsang National University, Jinju-si, Gyeongsangnam-do 52828 (KR)
(72) Inventor: KIM, Min Ho, Sejong 30152 (KR); KIM, Dae Woong, Sejong 30130 (KR); YE, Song Hae, Daejeon 34075 (KR); LEE, Won Kyu, Sejong 30146 (KR); KIM, Ju Sik, Daejeon 34048 (KR); MOON, Byeong Suk, Daejeon 34022 (KR); KANG, Sin Gyu, Seoul 06585 (KR); CHOI, Byeong Keun, Jinju-si, Gyeongsangnam-do 52735 (KR); YU, Hyeon Tak, Busan 47789 (KR)
(74) Representative: Habermann, Hruschka & Schnabel
(86) International application number: PCT/KR2021/016634
(87) International publication number: WO 2022/260221

(57) **Abstract**

A vibration measurement error determination method according to an embodiment of the present invention comprises: a vibration data acquisition step for acquiring vibration data by measuring a vibration generated in a structure; a first determination step for determining, on the basis of a preset error data selection rule, whether the vibration data is data generated by a measurement error; a second determination step for using a machine-learning algorithm to determine whether the vibration data is data generated by a measurement error; and a final determination step for determining, on the basis of the results determined in the first determination step and the second determination step, whether the vibration data is data generated by a measurement error.

## Description

### Technical Field

The present disclosure relates to a vibration measurement error determination method and a vibration error discernment system using the same, and more specifically, to a vibration measurement error determination method that detects whether data on the measurement error is included from vibration data and a vibration error discernment system using the same.

### Background Art

For structures where vibration inevitably occurs, a current state of the structure and a state of the structure in the near future can be predicted by measuring the vibration occurring in the structure. In particular, nuclear power plants use portable vibration measuring devices to measure the vibration of facilities for facility management.

Recently, technology has been developed to determine the state of the structure by analyzing vibration data generated from the structure using machine learning.

However, due to problems that occur in the process of measuring the vibration of the structure, vibration data including measurement errors may be collected. This ultimately leads to incorrect analysis results for the structure and reduces the reliability of predictive diagnosis.

For example, during the vibration measurement process, incorrect vibration measurement data may be collected due to a measurer's inexperience in using the equipment, neglect of management of the measuring equipment, external signal interference, or the like.

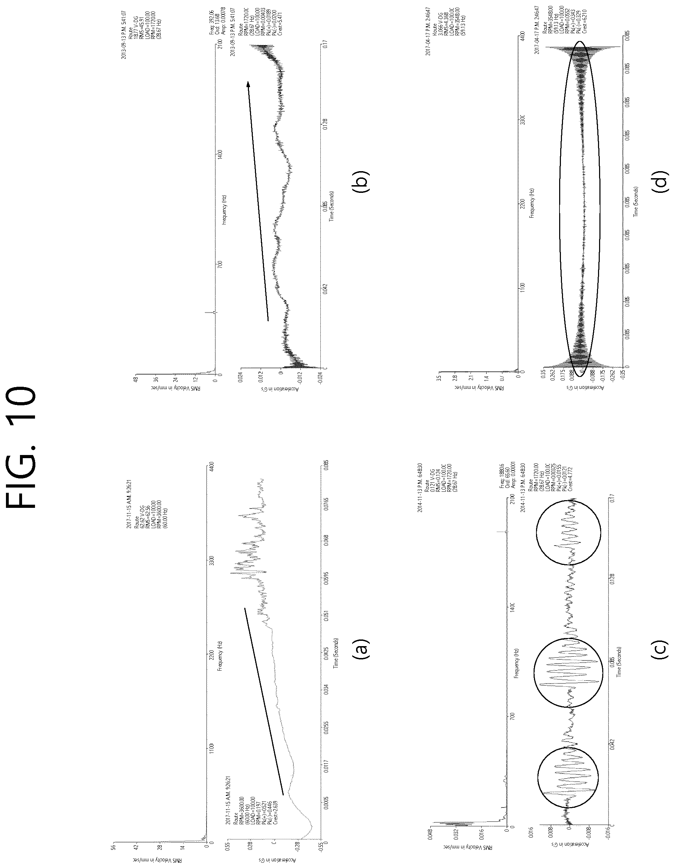

Referring to FIG. 10, (a) and (b) illustrate measurement data including noise due to residual stress after an impact occurs in a sensor that detects vibration, (c) illustrates measurement data including noise in a shock waveform due to problems such as sensor attachment, and (d) illustrates measurement data that includes noise due to defective sensors and/or cables.

Even when specialized machine learning is used to analyze the state of the vibration structure, vibration data including measurement error data generated during the vibration measurement process reduces the reliability of diagnosis.

### Disclosure

### Technical Problem

An object of the present disclosure is to provide a vibration measurement error determination method that detects whether data on measurement error is included from vibration data and a vibration error discernment system using the same.

An object of the present disclosure is not limited to the above-described object, and other objects not mentioned will be clearly understood by those skilled in the art from the description below.

### Technical Solution

According to an aspect of the present disclosure, there is provided a vibration measurement error determination method including: a vibration data acquisition step for acquiring vibration data by measuring a vibration generated in a structure; a first determination step for determining, on the basis of a preset error data selection rule, whether the vibration data is data generated by a measurement error; a second determination step for using a machine-learning algorithm to determine whether the vibration data is data generated by a measurement error; and a final determination step for determining, on the basis of the results determined in the first determination step and the second determination step, whether the vibration data is data generated by a measurement error.

The error data selection rule may determine whether the vibration data is the data generated by the measurement error based on a difference between an amplitude value of a low-frequency region extracted from the vibration data and a threshold value.

The low-frequency region may include a region of 3Hz or less.

The threshold value may be 0.6 mm/s.

The machine-learning algorithm may extract a plurality of sample data from the vibration data, extract feature information for determining the measurement error from the extracted plurality of sample data, and determine whether the vibration data is the data generated by the measurement error based on the extracted feature information.

The feature information may be extracted through principal component analysis from candidate feature information extracted from the plurality of sample data.

In the machine-learning algorithm, the feature information may be extracted for each sample data, the sample data may be clustered based on the feature information, and whether the vibration data is the data generated by a measurement error may be determined based on a clustering result.

According to another aspect of the present disclosure, there is provided a vibration measurement error discernment system including: a data acquisition unit configured to acquire vibration data by measuring a vibration generated in a structure; a first determination unit configured to determine, on the basis of a preset error data selection rule, whether the vibration data is data generated by a measurement error; a second determination unit configured to use a machine-learning algorithm to determine whether the vibration data is data generated by a measurement error; and a final determination unit configured to determine, on the basis of the determination results of the first determination unit and the second determination unit, whether the vibration data is data generated by a measurement error.

The error data selection rule may determine whether the vibration data is the data generated by the measurement error based on a difference between an amplitude value of a low-frequency region extracted from the vibration data and a threshold value.

The low-frequency region may include a region of 3Hz or less.

The threshold value may be 0.6 mm/s.

The machine-learning algorithm may extract a plurality of sample data from the vibration data, extract feature information for determining the measurement error from the extracted plurality of sample data, and determine whether the vibration data is the data generated by the measurement error based on the extracted feature information.

The feature information may be extracted through principal component analysis from candidate feature information extracted from the plurality of sample data.

In the machine-learning algorithm, the feature information may be extracted for each sample data, the sample data may be clustered based on the feature information, and whether the vibration data is the data generated by a measurement error may be determined based on a clustering result.

Other specific details of the present disclosure are included in detailed description and drawings.

### Advantageous Effects

According to embodiments of the present disclosure, at least the following effects can be obtained.

It can be determined whether the data on the measurement error is included in the measured vibration data.

Moreover, soundness of vibration data, which is the basic data for predictive diagnosis, can be improved by selecting incorrectly measured vibration data.

The effects of the present disclosure are not limited to those exemplified above, and more diverse effects are included within the specification.

### Description of Drawings

FIG. 1 is a flow chart to explain the vibration measurement error determination method according to one embodiment of the present disclosure.
FIG. 2 is a flow chart for explaining a first determination step in FIG. 1.
FIG. 3 is a graph illustrating an example of normal vibration data.
FIG. 4 is a graph illustrating an example of vibration data including a measurement error.
FIG. 5 is a graph illustrating expert determination results for sample vibration data.
FIG. 6 is a flow chart for explaining a second determination step in FIG. 1.
FIGS. 7 and 8 are graphs illustrating clustering results obtained by determining sample vibration data according to the second determination step.
FIG. 9 is a block diagram illustrating a vibration measurement error discernment system according to one embodiment of the present disclosure.
FIG. 10 is a graph illustrating examples of vibration data including a measurement error.

### Mode for Disclosure

Advantages and features of the present disclosure, and how to achieve them, will become clear by referring to the embodiments described in detail below along with the accompanying drawings. However, the present disclosure is not limited to the embodiments disclosed below and may be implemented in various different forms. These embodiments are provided solely to ensure that the disclosure of the present disclosure is complete and to fully inform those skilled in the art of the present disclosure of the scope of the invention, and that the present disclosure is defined only by the scope of claims. Like reference numerals refer to like elements throughout the specification.

Moreover, embodiments described herein will be described with reference to cross-sectional views and/or schematic diagrams, which are ideal examples of the present disclosure. Accordingly, the form of the illustration may be modified depending on manufacturing technology and/or tolerance. In addition, in each drawing illustrated in the present disclosure, illustrations of each component may be somewhat enlarged or reduced in consideration of convenience of explanation. Like reference numerals refer to like elements throughout the specification.

Hereinafter, the present disclosure will be described with reference to drawings illustrating a vibration measurement error determination method and a vibration measurement error discernment system using the same according to one embodiment of the present disclosure.

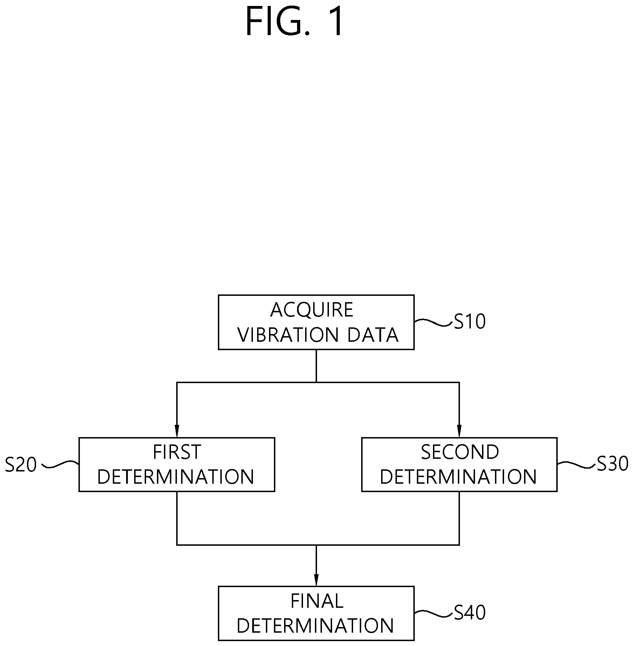

FIG. 1 is a flow chart to explain the vibration measurement error determination method according to one embodiment of the present disclosure.

Referring to FIG. 1, the vibration measurement error determination method according to one embodiment of the present disclosure includes a vibration data acquisition step S 10, a first determination step 520, a second determination step 530, and a final determination step 540.

In the vibration data acquisition step S10, vibration data is acquired by measuring the vibration generated in the structure. The vibration data may be acquired using a mobile vibration measuring device or from a database (DB) where vibration data is stored.

The structure may be a structure that includes a rotating device that operates while rotating. As the rotating device operates, vibration is generated in the structure. By measuring the vibration, the current states of the structure and rotating device can be diagnosed, and based on the current states, predictive diagnosis for the structure and rotating device, that is, prediction of the near future condition can be made. In particular, the vibration measurement error determination method according to one embodiment of the present disclosure can be used for facility management of nuclear power plants by acquiring vibration data for various facilities used in nuclear power plants.

In the first determination step 520, it can be determined whether the data generated by the measurement error is included in the vibration data acquired in the vibration data acquisition step S10 based on a preset error data selection rule. A more detailed explanation of this will be provided later.

In the second determination step 530, it is determined whether the data generated by measurement error is included in the vibration data acquired in the vibration data acquisition step S10 using a determination standard that is different from the determination standard in the first determination step 520. For example, in the second determination step 530, a machine-learning algorithm may be used to determine whether the data generated by measurement error is included in the vibration data acquired in the vibration data acquisition step S10. A more detailed explanation of this will be provided later.

In the final determination step 540, it is finally determined whether the data generated by the measurement error is included in the vibration data acquired in the vibration data acquisition step S10 based on the results determined in the first determination step S20 and the results determined in the second determination step S30.

For example, in the final determination step 540, it can be determined that there is no measurement error only for vibration data that is determined to have no measurement error in both the first determination step S20 and the second determination step S30.

Alternatively, in the final determination step 540, vibration data determined to have no measurement error in any one of the first determination step S20 and the second determination step S30 can be determined to have no measurement error.

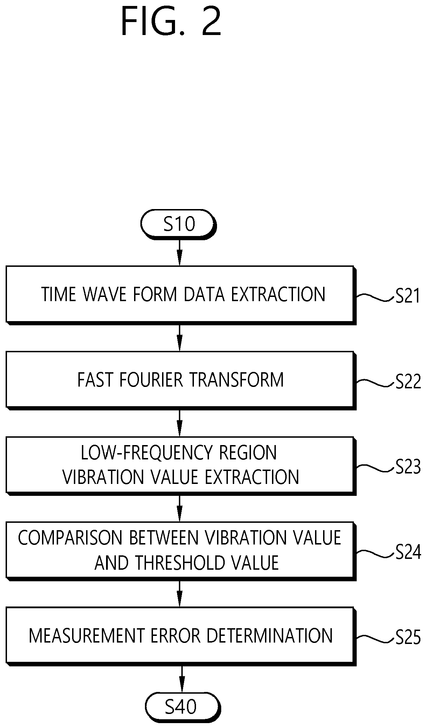

FIG. 2 is a flow chart to explain the first determination step in FIG. 1.

Referring to FIG. 2, the first determination step S20 includes a time waveform data extraction step S21, a fast Fourier transform step S22, a low-frequency region vibration value extraction step S23, a step of comparing vibration value with threshold value S24, and a measurement error determination step S25.

In the time waveform data extraction step S21, vibration data in a time wave form is extracted from the vibration data acquired in the vibration data acquisition step S10. When the vibration data acquired in the vibration data acquisition step S10 is data in the time wave form, the time wave form data extraction step S21 may be omitted.

In the fast Fourier transform step S22, the vibration data of the time waveform is converted into a frequency region. In the fast Fourier transform step S22, the vibration data of the time waveform may be sampled and then converted to a frequency region. In the process of converting vibration data of a time waveform into a frequency region, a Fast Fourier transform (FFT) may be used using a Rectangular Window that does not use a window function.

In the low-frequency region vibration value extraction step S23, an amplitude value for the low-frequency region is calculated and extracted from the vibration data converted to the frequency region.

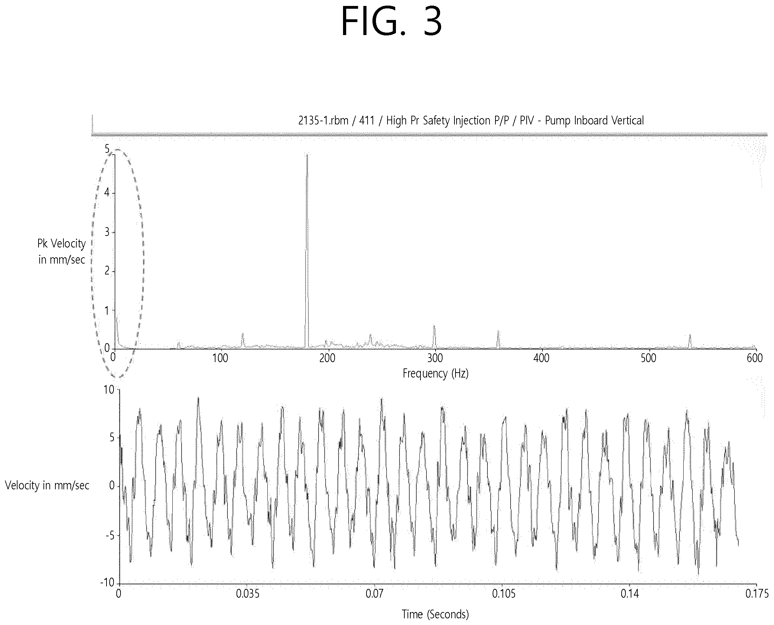

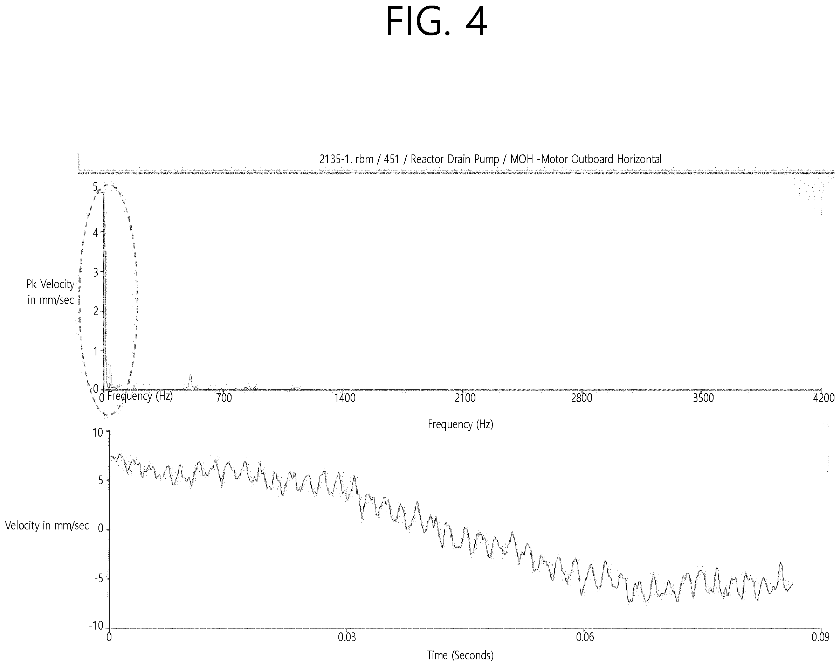

FIG. 3 is a graph illustrating an example of normal vibration data, and FIG. 4 is a graph illustrating an example of vibration data including a measurement error.

Referring to FIGS. 3 and 4, it can be seen that compared to normal vibration data, vibration data including a measurement error has a large amplitude in the low-frequency region of 3Hz or less, and a ski-slope phenomenon is observed in the low-frequency band. Therefore, in the step of low-frequency region vibration value extraction step S23, the low-frequency region may be set to the frequency region of 3 Hz or less.

In the step of comparing vibration value with threshold value S24, the vibration value of the low-frequency region extracted in the low-frequency region vibration value extraction step S23 is compared with the threshold value.

In order to find the threshold value for determining measurement error, the present applicant measured vibration data at 1,811 points for 248 facilities of Hanbit Power Plant 3 Units 5 and 6, and performed discrimination on vibration data including measurement errors by experts for a total of 10,634 sample vibration data.

As a result, out of 10,634 sample vibration data, the expert determined 10,175 to be normal vibration data, 231 to be vibration data including measurement error, and withheld determination for 228.

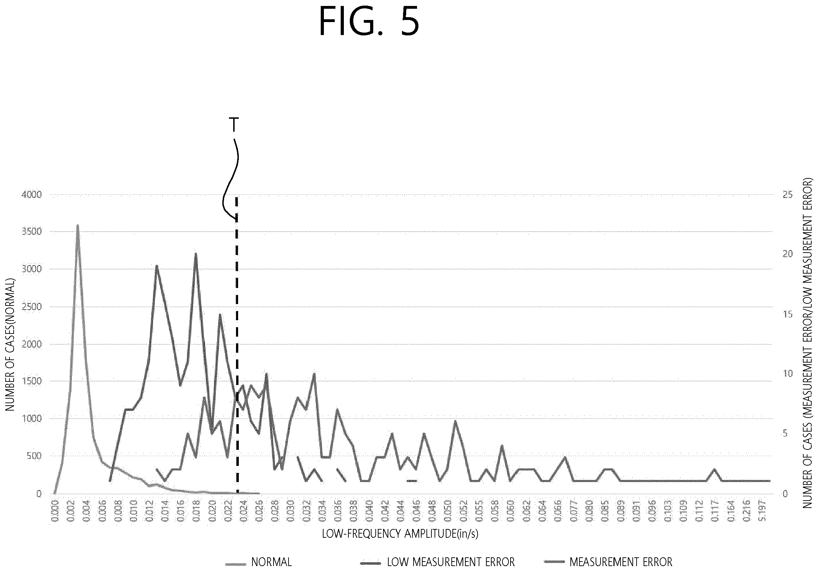

FIG. 5 is a graph illustrating expert determination results for sample vibration data.

Referring to FIG. 5, there is a lot of normal vibration data in a low-amplitude region (region of 0.006 in/s or less) of the low-frequency region, the normal vibration data and vibration data including measurement error overlap each other in a region in which the amplitude of the low-frequency region is 0.007 to 0.026 in/s, and the vibration data including the measurement error appears in a region where the amplitude of the low-frequency region is 0.013 in/s or more.

Based on FIG. 5, in order to set the threshold value of the amplitude, when the threshold values respectively are 0.4 mm/s (= 0.0157 in/s), 0.5 mm/s (= 0.0197 in/s), 0.6 mm/s (= 0.2362 in/s), 0.7 mm/s (= 0.0276 in/s), and 0.8 mm/s (= 0.0315 in/s), the number of cases where the vibration data including the measurement error was determined to be the normal vibration data was compared with the number of cases where the normal vibration data was determined to be the vibration data including the measurement error.

**Table 1**

| Reference amplitude | Measurement error → normal determination | | Normal → measurement error determination | | Total |
|---|---|---|---|---|---|
| | Number of cases | Ratio | Number of cases | Ratio | |
| 0.8 mm/s | 103 | 44.40% | 0 | 0.00% | 103 |
| 0.7 mm/s | 82 | 35.34% | 1 | 0.01% | 83 |
| **0.6 mm/s** | **48** | **20.69%** | **10** | **0.10%** | 58 |
| 0.5 mm/s | 24 | 10.34% | 29 | 0.29% | 53 |
| 0.4 mm/s | 7 | 3.02% | 113 | 1.11% | 120 |

When the threshold value was set to 0.8 mm/s, the normal vibration data was not determined as data including the measurement error, but there were many cases where the data including the measurement error was determined as the normal vibration data. Conversely, when the threshold value is set to 0.4 mm/s, the rate of determining the data including the measurement error as the normal vibration data decreases, but the rate of determining the normal vibration data as the data including the measurement errors increases.

Depending on the threshold value, it can be seen that there is a trade-off relationship between the ratio of determining the data including the measurement error as the normal vibration data and the ratio of determining the normal vibration data as the data including the measurement error.

In this example, the threshold value (T, see FIG. 5) was set to 0.6 mm/s in order to minimize determination of the normal vibration data as the data including the measurement error and also minimize overall misjudgment.

However, depending on the requirements such as precision in determining the measurement error, the threshold value of the low-frequency amplitude for selecting vibration data including measurement error may be selected differently within 0.4 to 0.8 mm/s, and if necessary, the threshold value may be set to a value of 0.4 mm/s or less, or a value of 0.8 mm/s or more.

In the step S24 of comparing the vibration value with the threshold value, the vibration value of the low-frequency region extracted in the low-frequency region vibration value extraction step S23 is compared with the set threshold value, and thus, it may be determined whether the vibration value is equal to or less than (or below) or above (or equal to or more than) the threshold value.

In the measurement error determination step S25, whether the data generated by the measurement error is included in the vibration data acquired in the vibration data acquisition step S10 is determined based on the difference between the vibration value determined in the step S24 of comparing the vibration value with the threshold value and the threshold value.

That is, when the vibration value is equal to or less than (or below) the threshold value, it may be determined as normal vibration data, and when the vibration value is above (or equal to or more than) the threshold value, it may be determined as vibration data including data generated by the measurement error.

As described above, in the first determination step 520, when it is determined whether the vibration data includes the data generated by the measurement error is included in the vibration data based on the error data selection rule, that is, the difference between the vibration value of the low-frequency region and the threshold value, depending on the threshold value, there are cases where the normal vibration data is determined as the data including the measurement error, or the data including the measurement error is determined as the normal vibration data.

To compensate for this, the vibration measurement error determination method according to this embodiment includes the second determination step 530.

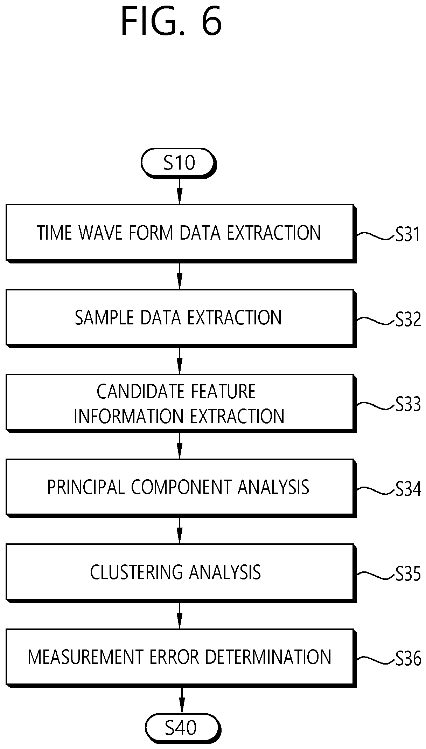

FIG. 6 is a flow chart for explaining the second determination step in FIG. 1.

In the second determination step 530, the machine-learning algorithm may be used to determine whether the data generated by the measurement error is included in the vibration data.

To this end, referring to FIG. 6, the second determination step S30 may include a time waveform data extraction step S31, a sample data extraction step S32, a candidate feature information extraction step S33, a principal component analysis step S34, a clustering analysis step S35, and a measurement error determination step S36.

In the time waveform data extraction step S31, vibration data in a time wave form is extracted from the vibration data acquired in the vibration data acquisition step S10. When the vibration data acquired in the vibration data acquisition step S10 is the data in the time wave form, the time wave form data extraction step S31 may be omitted.

In the sample data extraction step S32, at least one sample data may be extracted from the vibration data of the time waveform. The number of extracted sample data may be selected in various ways depending on the embodiment, but in order to ensure the robustness of the machine-learning algorithm that determines the measurement error from the vibration data, it is desirable to extract a large number of sample data from the vibration data. However, as the number of sample data increases, significant resources are required to extract feature information of the machine-learning algorithm, and thus, selection of an appropriate number of sample data is required. Considering this, the appropriate number of sample data is in the dozens, more preferably about 20. The extraction criteria for the sample data may be set in various ways depending on the embodiment.

In the candidate feature information extraction step S33, candidate feature information is extracted from the sample data extracted in the sample data extraction step S32.

The candidate feature information may be extracted from first statistical information calculated from the sample data extracted in the sample data extraction step S32 and/or the time waveform extracted in the time waveform data extraction step S31 or second statistical information calculated from the vibration data of the time waveform acquired in the vibration acquisition data step S10.

The first statistical information may include root mean square (RMS), mean, variance, and standard deviation of sample data. When there is a plurality of sample data extracted in the sample data extraction step S 12, the first statistical information may include the RMS, mean, variance, and standard deviation for each sample data.

The second statistical information may include the RMS, mean, variance, and standard deviation of vibration data of the time waveform.

Normal vibration data shows a pattern of periodically changing + and -. However, the vibration data including the measurement error shows a pattern of low periodicity, unlike normal vibration data.

Therefore, the average value among the statistical information of data may be an indicator that can distinguish between the normal vibration data and the vibration data including the measurement error.

Moreover, among the statistical information of data, the RMS value may be an indicator representing information related to the amplitude of the data.

Meanwhile, the variance and standard deviation of data may be indicators that can distinguish between the normal vibration data with periodicity and the vibration data including measurement error with aperiodicity. In particular, the sample data including measurement error in a plurality of sample data extracted from one vibration data shows higher variance and/or standard deviation than other sample data. Therefore, the variance and the standard deviation between sample data may be the indicators that can distinguish data related to the measurement error included in the vibration data. Moreover, the difference in the variance and/or standard deviation between the vibration data and the sample data may also be the indicator that can distinguish data related to the measurement error included in the vibration data.

The candidate feature information may include abnormal features in the form of signals that appear relatively high in the vibration data including the measurement error, features with high reactivity to the variance, features with low reactivity to signals or periodic components generated by defects, or the like.

Hereinafter, for convenience of explanation, the RMS of sample data, which is the first statistical information, is referred to as s_rms, the mean of sample data is referred to as s_mean, the variance of sample data is referred to as s_var, and the standard deviation of sample data is referred to as s_std.

In addition, the RMS of the vibration data, which is the second statistical information, is referred to as d_rms, the mean of the vibration data is referred to as d_mean, the variance of the vibration data is referred to as d_var, and the standard deviation of the vibration data is referred to as d_std.

The candidate feature information proposed in this specification is illustrated in [Table 2] below.

**Table 2**

| No. | Feature | No. | Feature |
|---|---|---|---|
| 1 | s_mean/s_rms | 7 | d_mean/s_rms |
| 2 | s_std/d_rms | 8 | s_std/s_rms |
| 3 | s_std/d_std | 9 | s_var/d_var |
| 4 | s_mean/d_var | 10 | s_std/s_var |
| 5 | s_mean/d_std | 11 | s_var/s_std |
| 6 | s_mean/d_rms | 12 | s_var/s_rms |

Referring to [Table 2], First candidate feature information may be a ratio (s_mean/s_rms) of the mean (s_mean) of the sample data to the RMS (s_rms) of the sample data.

Second candidate feature information may be a ratio (s_std/d_rms) of the standard deviation (s_std) of the sample data to the RMS (d_rms) of the vibration data.

Third candidate feature information may be a ratio (s_std/d_std) of the standard deviation (s_std) of the sample data to the standard deviation (d_std) of the vibration data.

Fourth candidate feature information may be a ratio (s_mean/d_var) of the mean (s_mean) of the sample data to the variance (d_var) of the vibration data.

Fifth candidate feature information may be a ratio (s_mean/d_std) of the mean (s_mean) of the sample data to the standard deviation (d_std) of the vibration data.

Sixth candidate feature information may be a ratio (s_mean/d_rms) of the mean (s_mean) of the sample data to the RMS (d_rms) of vibration data.

Seventh candidate feature information may be a ratio (d_mean/s_rms) of the mean (d_mean) of the vibration data to the RMS (s_rms) of the sample data.

Eighth candidate feature information may be a ratio (s_std/s_rms) of the standard deviation (s_std) of the sample data to the RMS (s_rms) of the sample data.

Ninth candidate feature information may be a ratio (s_var/d_var) of the variance (s_var) of the sample data to the variance (d_var) of the vibration data.

Tenth candidate feature information may be a ratio (s_std/s_var) of the standard deviation (s_std) of the sample data to the variance (s_var)of the sample data.

Eleventh candidate feature information may be a ratio (s_var/s_std) of the variance (s_var)of the sample data to the standard deviation (s_std) of the sample data.

Twelfth candidate feature information may be the ratio (s_var/s_rms) of the variance (s_var)of the sample data to the RMS (s_rms) of the sample data.

Of the four types of first statistical information (s_rms, s_mean, s_var, s_std) and four types of second statistical information (d_rms, d_mean, d_var, d_std), 56 types of ratio information for two types of information can be derived. However, it was confirmed that the 12 types of candidate feature information described above are specific information that responds sensitively to measurement errors in vibration data.

In the principal component analysis step S34, feature information may be extracted by reducing the dimension of 12 candidate features through principal component analysis (PCA). This is for efficient analysis using machine learning. However, the principal component analysis step S34 may be omitted depending on the embodiment.

In the clustering analysis step S35, sampling data is clustered based on the feature information. The clustering is a type of unsupervised learning that evaluates the clustering based on the similarity between unlabeled data.

Since the method according to this embodiment aims to distinguish between the normal vibration data and the vibration data including the measurement errors, the structural conditions to be determined through clustering are simple, and a small number of measurement error data should be found within a large amount of data. Accordingly, the clustering technique is suitable as the machine learning method to distinguish between the normal vibration data and the vibration data including the measurement error.

Among clustering techniques, hierarchical clustering can be divided into an agglomerated type clustering (merged hierarchical clustering) which is a bottom-up method, and a separate type clustering (split hierarchical clustering) which is a top-down method. The agglomeration type clustering is a method that starts from each data and sequentially sorts similar data.

When applying the agglomerative clustering to this embodiment, a method of starting with N clusters each having one sample data to calculate a similarity matrix for them, finding the pair of most similar clusters based on this to merge them into one cluster, and repeating the process of updating similarity matrix again so that all sample data become one cluster may be performed.

Additionally, agglomerative clustering algorithms include Single linkage, Complete linkage, Centroid linkage, Average linkage, Ward's linkage, or the like.

Among these, while other algorithms perform cluster merging based on the distance between clusters, the Ward's linkage performs cluster merging in a way that minimizes the variation within the cluster. In particular, in the Ward's linkage, it is less sensitivity to noise and outliers compared to the single linkage, and other algorithms tend to cluster clusters of similar size. Accordingly, the Ward's linkage is determined to be more suitable for this embodiment, which distinguishes between the normal vibration data and the vibration data including the measurement error.

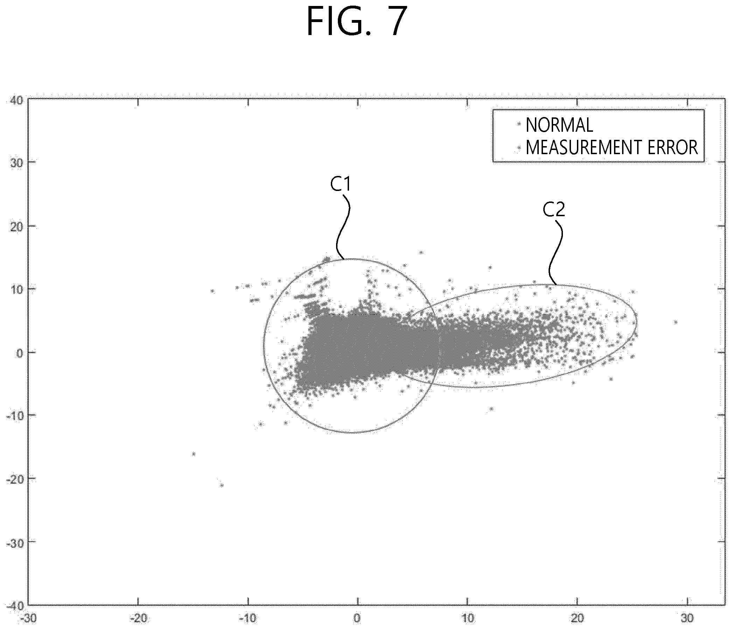

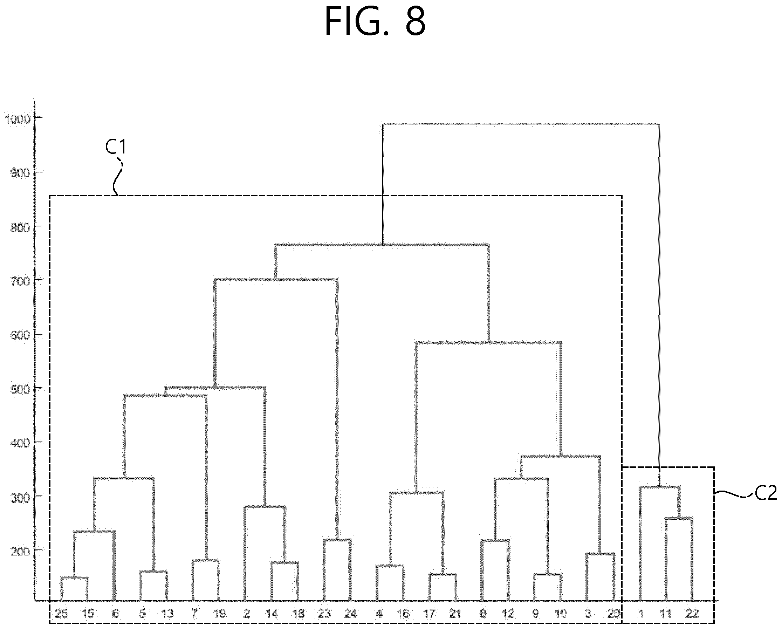

FIGS. 7 and 8 are graphs illustrating clustering results obtained by determining existing vibration data according to the second determination step.

Referring to FIGS. 7 and 8, it can be seen that normal vibration data C1 and vibration data C2 including measurement error are clustered into different clusters. By the second determination step, 1,188 data out of 10,634 sample vibration data were identified as the vibration data C2 including measurement error.

In the measurement error determination step S36, it can be determined whether the data generated by the measurement error is included in the vibration data acquired in the vibration data acquisition step S10 based on the analysis results derived in the clustering analysis step S35.

As illustrated in FIG. 5, the measurement error determination for the vibration data according to the second determination step S30 is a region that is difficult for even experts to accurately determine. However, it is possible to compensate for the determination error in the first determination step S20 by providing an accurate basis for determination in a region where the normal vibration data that is not accurately determined in the first determination step S20 and the vibration data including the measurement error are mixed.

As described above, according to the vibration measurement error determination method of one embodiment of the present disclosure, whether the data generated by the measurement error is included in the vibration data is determined using two different determination methods, and whether the data generated by the measurement error is included in the vibration data is finally determined by collecting the determination results according to each determination method. Therefore, it is possible to improve accuracy of the determination.

Additionally, the soundness of vibration data, which is the basic data for predictive diagnosis, can be improved by selecting incorrectly measured vibration data.

Hereinafter, a vibration measurement error discernment system using the above-described vibration measurement error determination method will be described.

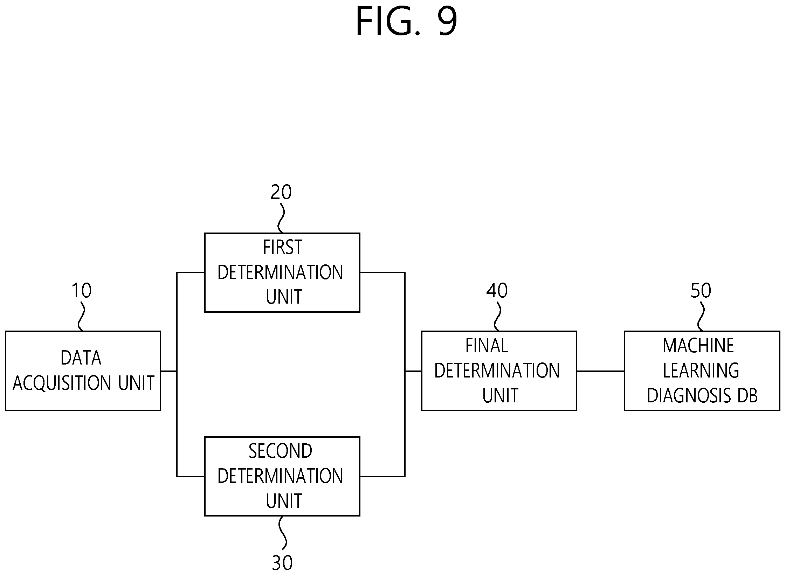

FIG. 9 is a block diagram illustrating a vibration measurement error discernment system according to one embodiment of the present disclosure.

Referring to FIG. 9, the vibration measurement error discernment system according to one embodiment of the present disclosure includes a data acquisition unit 10, a first determination unit 20, a second determination unit 30, a final determination unit 40, and a machine learning analysis database 50.

The data acquisition unit 10 performs the above-described vibration data acquisition step S10. That is, the data acquisition unit 10 may acquire vibration data from a mobile vibration measuring device or acquire vibration data from a database DB in which vibration data is stored.

The first determination unit 20 performs the above-described first determination step 520. That is, the first determination unit 20 may determine whether the data generated by the measurement error is included in the vibration data acquired in the vibration data acquisition step S10 based on a preset error data selection rule.

The second determination unit 30 performs the above-described second determination step 530. That is, the second determination unit 30 determines whether the data generated by the measurement error is included in the vibration data acquired in the vibration data acquisition step S10 using a determination standard that is different from the determination standard of the first determination step 520. For example, the second determination unit 30 may use a machine-learning algorithm to determine whether the data generated by the measurement error is included in the vibration data acquired in the vibration data acquisition step S 10.

The final determination unit 40 performs the above-described final determination step 540. That is, the final determination unit 40 collects the determination results of the first determination unit 20 and the determination results of the second determination unit 30 and finally determines whether the data generated by the measurement error is included in the vibration data acquired in the vibration data acquisition step S 10.

The final determination unit 40 may determine that there is no measurement error only for vibration data that is determined to have no measurement error in both the first determination step S20 and the second determination step 530. Alternatively, the final determination unit 40 may determine that there is no measurement error only for vibration data determined to have no measurement error in any one of the first determination step S20 and the second determination step S30.

The final determination unit 40 may provide the user with a notification that a measurement error exists for vibration data determined to have a measurement error.

In this embodiment, the first determination unit 20, the second determination unit 30, and the final determination unit 40 are described as separate configurations, but this means that the first determination unit 20, the second determination unit 30, and the final determination unit 40 are functionally separated and explained, and the first determination unit 20, the second determination unit 30, and the final determination unit 40 may be physically configured of one or more calculation units.

The machine learning analysis database 50 may include a machine learning algorithm that performs analysis on vibration data.

The final determination unit 40 may provide the vibration data determined to have no measurement error to the machine learning analysis database 50, and the machine learning analysis database 50 may update the vibration data received from the final determination unit 40.

As described above, according to the vibration measurement error discernment system of one embodiment of the present disclosure, whether the data generated by the measurement error is included in the vibration data is determined using two different determination methods, and whether the data generated by the measurement error is included in the vibration data is finally determined by collecting the determination results according to each determination method. Therefore, it is possible to improve accuracy of the determination.

Moreover, the soundness of vibration data, which is the basic data for predictive diagnosis, can be improved by selecting incorrectly measured vibration data.

A person with ordinary knowledge in the technical field to which the present disclosure belongs will understand that the present disclosure can be implemented in other specific forms without changing its technical idea or essential features. Therefore, the embodiments described above should be understood in all respects as illustrative and not restrictive. The scope of the present disclosure is indicated by the patent claims described later rather than the detailed description above, and the meaning and scope of the patent claims and any changes or modified forms derived from the equivalent concept thereof shall be construed as being included in the scope of the present disclosure.

## Claims

1. A vibration measurement error determination method comprising:
a vibration data acquisition step for acquiring vibration data by measuring a vibration generated in a structure;
a first determination step for determining, on the basis of a preset error data selection rule, whether the vibration data is data generated by a measurement error;
a second determination step for using a machine-learning algorithm to determine whether the vibration data is data generated by a measurement error; and
a final determination step for determining, on the basis of the results determined in the first determination step and the second determination step, whether the vibration data is data generated by a measurement error.

2. The vibration measurement error determination method of claim 1, wherein the error data selection rule determines whether the vibration data is the data generated by the measurement error based on a difference between an amplitude value of a low-frequency region extracted from the vibration data and a threshold value.

3. The vibration measurement error determination method of claim 2, wherein the low-frequency region includes a region of 3Hz or less.

4. The vibration measurement error determination method of claim 2, wherein the threshold value is 0.6 mm/s.

5. The vibration measurement error determination method of claim 1, wherein the machine-learning algorithm extracts a plurality of sample data from the vibration data, extracts feature information for determining the measurement error from the extracted plurality of sample data, and determines whether the vibration data is the data generated by the measurement error based on the extracted feature information.

6. The vibration measurement error determination method of claim 5, wherein the feature information is extracted through principal component analysis from candidate feature information extracted from the plurality of sample data.

7. The vibration measurement error determination method of claim 5, wherein in the machine-learning algorithm, the feature information is extracted for each sample data, the sample data is clustered based on the feature information, and whether the vibration data is the data generated by a measurement error is determined based on a clustering result.

8. A vibration measurement error discernment system comprising:
a data acquisition unit configured to acquire vibration data by measuring a vibration generated in a structure;
a first determination unit configured to determine, on the basis of a preset error data selection rule, whether the vibration data is data generated by a measurement error;
a second determination unit configured to use a machine-learning algorithm to determine whether the vibration data is data generated by a measurement error; and
a final determination unit configured to determine, on the basis of the determination results of the first determination unit and the second determination unit, whether the vibration data is data generated by a measurement error.

9. The vibration measurement error discernment system of claim 8, wherein the error data selection rule determines whether the vibration data is the data generated by the measurement error based on a difference between an amplitude value of a low-frequency region extracted from the vibration data and a threshold value.

10. The vibration measurement error discernment system of claim 9, wherein the low-frequency region includes a region of 3Hz or less.

11. The vibration measurement error discernment system of claim 9, wherein the threshold value is 0.6 mm/s.

12. The vibration measurement error discernment system of claim 8, wherein the machine-learning algorithm extracts a plurality of sample data from the vibration data, extracts feature information for determining the measurement error from the extracted plurality of sample data, and determines whether the vibration data is the data generated by the measurement error based on the extracted feature information.

13. The vibration measurement error discernment system of claim 12, wherein the feature information is extracted through principal component analysis from candidate feature information extracted from the plurality of sample data.

14. The vibration measurement error discernment system of claim 12, wherein in the machine-learning algorithm, the feature information is extracted for each sample data, the sample data is clustered based on the feature information, and whether the vibration data is the data generated by a measurement error is determined based on a clustering result.
